# EUROPEAN PATENT SPECIFICATION

(11) **EP 4 317 613 B1**
(45) Date of publication and mention of the grant of the patent: **10.09.2025**
(21) Application number: 22781199.9
(22) Date of filing: 30.03.2022
(51) Int. Cl.: E02F 9/22

(54) **SHOVEL**
SCHAUFEL
PELLE

(30) Priority: 31.03.2021 JP 2021061267
(43) Date of publication of application: 07.02.2024
(73) Proprietor: Sumitomo Construction Machinery Co., Ltd., Tokyo 141-6025 (JP)
(72) Inventor: FUKUOKA, Toshiki, Chiba-shi, Chiba 263-0001 (JP); FUJIKAWA, Tomoyuki, Chiba-shi, Chiba 263-0001 (JP)
(74) Representative: Louis Pöhlau Lohrentz
(86) International application number: PCT/JP2022/016333
(87) International publication number: WO 2022/210989

(56) References cited:
- JP-A- 2002 201 675
- JP-A- 2006 226 255
- JP-A- 2007 002 755
- JP-A- 2007 092 763
- JP-A- 2009 235 720
- JP-A- 2015 209 691
- US-A1- 2002 083 825
- US-A1- 2010 275 589

## Description

### BACKGROUND OF THE INVENTION

### Field of the Invention

The present disclosure relates to a shovel.

### Description of the Related Art

For example, in shovels, there is known a technique of switching a level of an output related to an operation of the shovel in accordance with an input from a user such as an operator (see Patent Document 1).

In Patent Document 1, an operator can adjust the level of the rotational speed of the engine. Patent Document 2 discloses a shovel with the features of the preamble of claim 1.

### RELATED-ART DOCUMENTS

### Patent Documents

[Patent Document 1] Japanese Patent Application Laid-Open No. 2015-209691
[Patent Document 2] United States Patent Application US 2010/275589 A1

### SUMMARY OF THE INVENTION

### Problems to be Solved by the Invention

In a shovel, there is a case where a plurality of operation modes to be selected in accordance with a work situation or the like of the shovel is prepared in advance. For example, in addition to a normal operation mode, there are an operation mode in which priority is given to fuel consumption performance, an operation mode in the case of performing a lifting operation, and the like.

However, when an operator switches the operation mode, it may take time to adjust the level of the output related to the operation of the shovel again in accordance with the operation mode after switching.

In view of the above problem, an object of the present invention is to provide a technique capable of improving convenience for an operator when an operation mode of a shovel is switched.

### Means for solving the problem

In order to achieve the above object, one embodiment of the present disclosure provides a shovel configured to selectively use an operation mode among a plurality of operation modes having different output characteristics related to an operation of the shovel in accordance with an input from a user, and store, when the operation mode is switched, a setting of a user-changeable output related to an operation of the shovel in association with the operation mode used before switching, the setting being used in the operation mode before switching.

### Effects of the Invention

The embodiments described above provide a technique that can improve convenience for an operator when the operating mode of the shovel is switched.

### BRIEF DESCRIPTION OF THE DRAWINGS

[FIG. 1] FIG. 1 is an external view illustrating an example of a shovel;
[FIG. 2] FIG. 2 is a view illustrating an example of a configuration of the shovel;
[FIG. 3] FIG. 3 is a top view illustrating an example of an internal configuration of a cabin;
[FIG. 4] FIG. 4 is a side view illustrating an example of an internal configuration of the cabin;
[FIG. 5] FIG. 5 is a diagram illustrating an example of a characteristic of a parameter representing an output related to an operation of the shovel for each of a plurality of operation modes;
[FIG. 6] FIG. 6 is a diagram illustrating another example of characteristics of a parameter representing an output related to an operation of the shovel for each of a plurality of operation modes;
[FIG. 7] FIG. 7 is a flowchart schematically illustrating an example of control processing relating to switching of the operation modes by a controller; and
[FIG. 8] FIG. 8 is a flowchart schematically illustrating an example of control processing relating to switching of the operation modes by the controller.

### DETAILED DESCRIPTION OF THE INVENTION

Hereinafter, embodiments will be described with reference to the drawings.

### [Overview of Shovel]

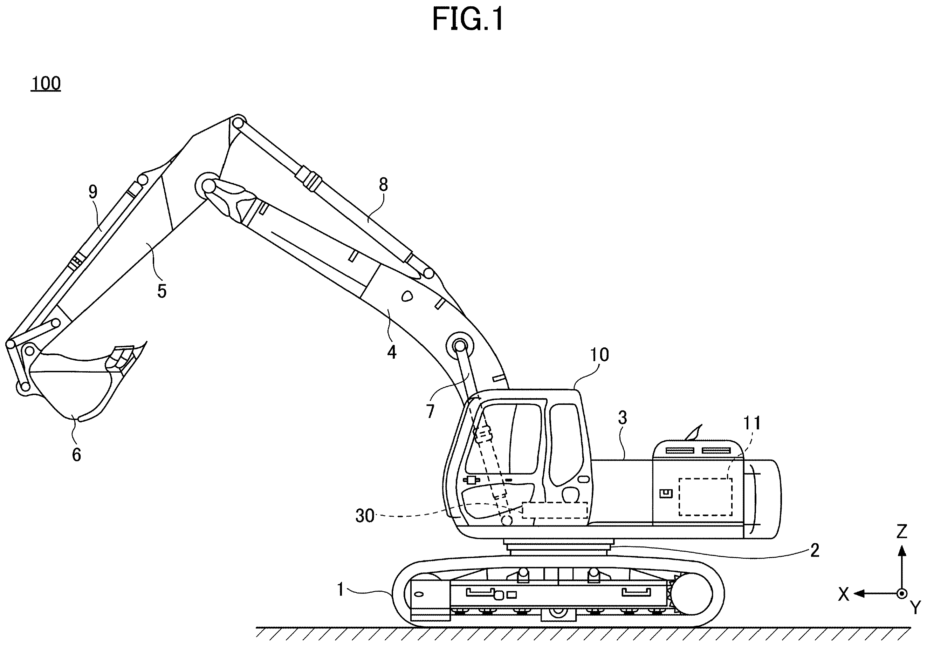

First, an overview of a shovel 100 according to the present embodiment will be described with reference to FIG. 1.

FIG. 1 is an external view illustrating an example of the shovel 100 according to the present embodiment.

As illustrated in FIG. 1, the shovel 100 according to the present embodiment includes a lower traveling body 1, an upper turning body 3 turnably mounted on the lower traveling body 1 via a turning mechanism 2, attachments including a boom 4, an arm 5, and a bucket 6, and a cabin 10 on which an operator board. Hereinafter, the front of the shovel 100 corresponds to a direction in which the attachments to the upper turning body 3 extend when the shovel 100 is viewed in a plan view from directly above along the turning axis of the upper turning body 3 (hereinafter, simply referred to as "plan view"). The left side and the right side of the shovel 100 respectively correspond to the left side and the right side viewed from the operator in the cabin 10. Further, a front-rear direction of the shovel 100 is defined as an X-axis direction, a left-right direction of the shovel 100 is defined as a Y-axis direction, and a height direction (up-down direction) of the shovel 100 is defined as a Z-axis direction, and description will be explained using the X-axis direction, the Y-axis direction, and the Z-axis direction in some cases. In this case, the forward direction, the rearward direction, the leftward direction, the rightward direction, the upward direction, and the downward direction of the shovel 100 are defined as an X-axis positive direction, an X-axis negative direction, a Y-axis positive direction, a Y-axis negative direction, a Z-axis positive direction, and a Z-axis negative direction, respectively.

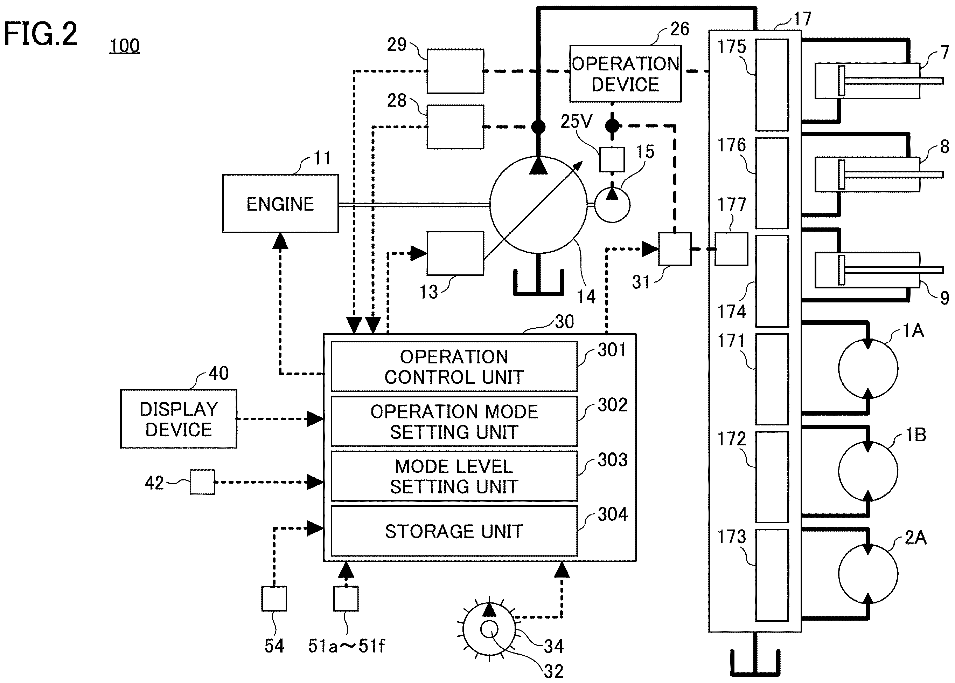

The lower traveling body 1 includes, for example, a pair of left and right crawlers. The crawlers of the lower traveling body 1 are hydraulically driven by a left traveling hydraulic oil motor 1A and a right traveling hydraulic oil motor 1B (see FIG. 2) to cause the shovel 100 to travel.

The upper turning body 3 turns with respect to the lower traveling body 1 by the turning mechanism 2 being hydraulically driven by a turning hydraulic oil motor 2A.

The boom 4 is attached to the center of the front portion of the upper turning body 3 so as to be able to rise and fall, the arm 5 is attached to the tip end of the boom 4 so as to be able to rotate up and down, and the bucket 6 is attached to the tip end of the arm 5 so as to be able to rotate up and down.

The bucket 6 is an example of an end attachment. The bucket 6 is used for, for example, excavation work or the like. In addition, instead of the bucket 6, another end attachment may be attached to the tip of the arm 5 depending on the work content or the like. Other end attachments may be other types of buckets such as, for example, a slope bucket, a dredging bucket, or the like. In addition, the other end attachment may be an end attachment of a type other than the bucket, such as an agitator, a breaker, or the like.

The boom 4, the arm 5, and the bucket 6 are hydraulically driven by a boom cylinder 7, an arm cylinder 8, and a bucket cylinder 9 as hydraulic actuators, respectively.

The shovel 100 may be configured such that some or all of the driven elements such as the lower traveling body 1, the upper turning body 3, the boom 4, the arm 5, and the bucket 6 are electrically driven by electric actuators. That is, the shovel 100 may be a hybrid shovel or an electric shovel.

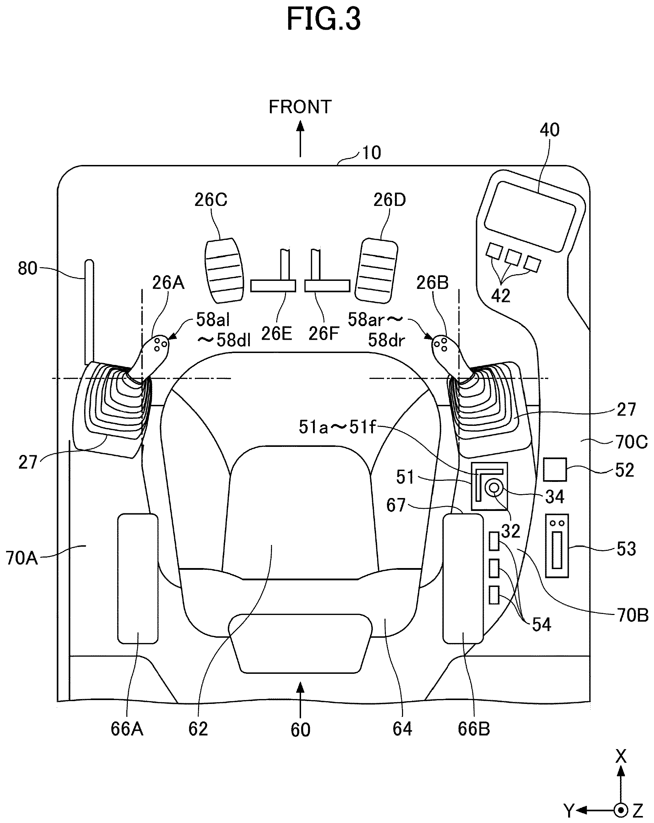

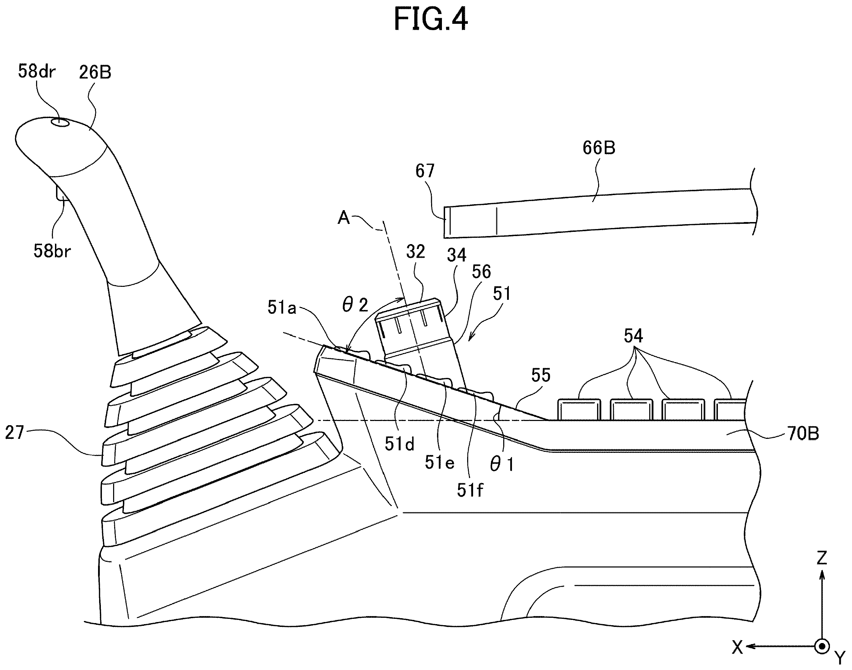

The cabin 10 is a cockpit in which an operator boards, and is mounted on the front left side of the upper turning body 3, for example. As will be described later, a cockpit 60 is provided inside the cabin 10, and devices of an operation system for an operator to operate the shovel 100, input devices for various inputs to the shovel 100 (controller 30), and the like are provided (see FIGS. 3 and 4).

The shovel 100 operates actuators (for example, hydraulic actuators) in accordance with an operation of an operator who boards in the cabin 10, and drives operation elements (hereinafter, "driven elements") such as the lower traveling body 1, the upper turning body 3, the boom 4, the arm 5, the bucket 6, and the like.

Further, instead of or in addition to being configured to be operable by an operator in the cabin 10, the shovel 100 may be configured to be remotely operable from the outside of the shovel 100. When the shovel 100 is remotely operated, the inside of the cabin 10 may be in an unmanned state. Hereinafter, description will be explained on the assumption that the operation of the operator includes at least one of an operation on the operation device 26 by the operator in the cabin 10 and a remote operation by an external operator.

The remote operation includes, for example, an embodiment in which the shovel 100 is operated by an input from an operator related to actuators of the shovel 100 performed by a predetermined external device (for example, a management device 300 or a terminal device 200 described below). In this case, for example, the shovel 100 may transmit image information (hereinafter referred to as a "peripheral image") of the periphery of the shovel 100 based on an output of an imaging device that images the periphery of the shovel 100 to the external device, and the image information may be displayed on a display device (hereinafter referred to as a "remote operation display device") provided in the external device. In addition, various information images (information screens) displayed on a display device 40 in the cabin 10 of the shovel 100 may also be displayed on the remote operation display device provided in an external device. Accordingly, an operator of the external device can remotely operate the shovel 100 while checking display contents such as a peripheral image representing a state of the periphery of the shovel 100 and various information images displayed on the remote operation display device, for example. Then, the shovel 100 may operate the actuators in accordance with a remote operation signal indicating the content of the remote operation received from the external device and drive the driven elements such as the lower traveling body 1, the upper turning body 3, the boom 4, the arm 5, the bucket 6, and the like.

The remote operation may include, for example, an aspect in which the shovel 100 is operated by a voice input, a gesture input, or the like from the outside to the shovel 100 by a person (for example, an operator) around the shovel 100. Specifically, the shovel 100 recognizes a voice uttered by a nearby worker or the like, a gesture performed by the worker or the like, through an imaging device, a voice input device (for example, a microphone), or the like mounted on the shovel 100 (reference machine). Then, the shovel 100 may operate the actuators in accordance with the content of the recognized voice, gesture, or the like to drive the driven elements such as the lower traveling body 1, the upper turning body 3, the boom 4, the arm 5, the bucket 6, and the like.

In addition, the shovel 100 may automatically operate actuators different from the actuators to be operated by an operator in a mode of assisting the operation of the operator. Thus, the shovel 100 realizes a function of automatically operating at least a part of the driven elements such as the lower traveling body 1, the upper turning body 3, the boom 4, the arm 5, the bucket 6, and the like in accordance with the operation of the operator (so-called "semi-automatic operation function" or "operation-assisted machine control function").

### [Configuration of Shovel]

Next, a specific configuration of the shovel 100 according to the present embodiment will be described with reference to FIG. 2 in addition to FIG. 1.

FIG. 2 is a block diagram illustrating an example of a configuration of the shovel 100 according to the present embodiment. In FIG. 2, a path through which mechanical power is transmitted is indicated by a double line, a path through which high-pressure hydraulic oil for driving the hydraulic actuators flow is indicated by a solid line, a path through which pilot pressure is transmitted is indicated by a broken line, and a path through which an electric signal is transmitted is indicated by a dotted line. FIGS. 3 and 4 are a top view and a side view, respectively, illustrating an example of the internal configuration of the cabin 10.

The shovel 100 includes components such as a hydraulic drive system related to hydraulic drive of a driven element, an operation system related to operation of the driven element, a user interface system related to exchange of information with a user, and a control system related to various controls. The user of the shovel 100 may include not only an operator who operates the shovel 100 but also an owner and a manager of the shovel 100, a manager of a work site of the shovel 100, a supervisor, a worker, and the like.

### <Hydraulic Drive System>

As illustrated in FIG. 2, the hydraulic drive system of the shovel 100 according to the present embodiment includes hydraulic actuators that hydraulically drive the respective driven elements such as the lower traveling body 1 (the left and right crawlers), the upper turning body 3, the boom 4, the arm 5, the bucket 6, and the like as described above. The hydraulic actuators include the traveling hydraulic oil motors 1A and 1B, the turning hydraulic oil motor 2A, the boom cylinder 7, the arm cylinder 8, the bucket cylinder 9, and the like. The hydraulic drive system of the shovel 100 according to the present embodiment includes an engine 11, a regulator 13, a main pump 14, a control valve 17, and a hydraulic control valve 31.

The engine 11 is a main power source (prime mover) in the hydraulic drive system. The engine 11 is, for example, a diesel engine that uses light oil as fuel. The engine 11 is mounted on, for example, a rear portion of the upper turning body 3. The engine 11 constantly rotates at a preset target rotation speed under direct or indirect control by a controller 30 described later, and drives the main pump 14 and a pilot pump 15.

Instead of or in addition to the engine 11, another prime mover that drives the main pump 14 and the pilot pump 15 may be mounted on the shovel 100. The other prime mover is, for example, an electric motor.

The regulator 13 controls (adjusts) the discharge amount of the main pump 14 under the control of the controller 30. For example, the regulator 13 adjusts an angle of a swash plate of the main pump 14 (hereinafter, referred to as a "tilt angle") in response to a control command from the controller 30.

The main pump 14 supplies hydraulic oil to the control valve 17 through a high-pressure hydraulic line. The main pump 14 is mounted on the rear portion of the upper turning body 3, for example, similarly to the engine 11. As described above, the main pump 14 is driven by the engine 11. The main pump 14 is, for example, a variable displacement hydraulic pump, and as described above, under the control of the controller 30, the tilting angle of the swash plate is adjusted by the regulator 13 to adjust the stroke length of the piston, thereby controlling the discharge flow rate (discharge pressure).

The control valve 17 is a hydraulic control device that controls the hydraulic actuators in accordance with the content of an operation or a remote operation performed on the operation device 26 by an operator or an operation command related to the semi-automatic driving function output from the controller 30. The control valve 17 is mounted on, for example, a central portion of the upper turning body 3. As described above, the control valve 17 is connected to the main pump 14 via the high-pressure hydraulic line. The control valve 17 selectively supplies the hydraulic oil supplied from the main pump 14 to the plurality of hydraulic actuators in accordance with the content of an operation by an operator or an operation command output from the controller 30. Specifically, the control valve 17 includes a plurality of control valves (also referred to as "direction switching valves") 171 to 176 that control the flow rate and the flow direction of the hydraulic oil supplied from the main pump 14 to each of the plurality of hydraulic actuators.

The control valve 171 is configured to be capable of supplying the hydraulic oil to the traveling hydraulic oil motor 1A, discharging the hydraulic oil from the traveling hydraulic oil motor, and returning the hydraulic oil to the tank. Thus, the control valve 171 can drive the traveling hydraulic oil motor 1A.

A control valve 172 is configured to be capable of supplying the hydraulic oil to the traveling hydraulic oil motor 1B, discharging the hydraulic oil from the traveling hydraulic oil motor, and returning the hydraulic oil to the tank. Thus, the control valve 172 can drive the traveling hydraulic oil motor 1B.

A control valve 173 is configured to be capable of supplying the hydraulic oil to the turning hydraulic oil motor 2A, discharging the hydraulic oil from the turning hydraulic oil motor 2A, and returning the hydraulic oil to the tank. Thus, the control valve 173 can drive the turning hydraulic oil motor 2A.

A control valve 174 is configured to be capable of supplying the hydraulic oil to the bucket cylinder 9, discharging the hydraulic oil from the bucket cylinder 9, and returning the hydraulic oil to the tank. Thus, the control valve 174 can drive the bucket cylinder 9 in accordance with the pilot pressure supplied from the hydraulic control valve 31 corresponding to the operation of the bucket cylinder 9 (that is, the operation of the bucket 6).

A control valve 175 is configured to be capable of supplying the hydraulic oil to the boom cylinder 7, discharging the hydraulic oil from the boom cylinder 7, and returning the hydraulic oil to the tank. Thus, the control valve 175 can drive the boom cylinder 7.

A control valve 176 is configured to be capable of supplying hydraulic oil to the arm cylinder 8, discharging hydraulic oil from the arm cylinder 8, and returning the hydraulic oil to the tank. Thus, the control valve 176 can drive the arm cylinder 8 in accordance with the pilot pressure supplied from the hydraulic control valve 31 corresponding to the operation of the arm cylinder 8 (that is, the operation of the arm 5).

Further, the control valve 17 includes a bleed valve 177.

The bleed valve 177 controls a flow rate (hereinafter, referred to as a "bleed flow rate") of the hydraulic oil that returns to the hydraulic oil tank without passing through the hydraulic actuators among the hydraulic oil discharged by the main pump 14. Specifically, the bleed valve 177 may operate in accordance with the pilot pressure supplied from the hydraulic control valve 31. The bleed valve 177 may be provided outside the control valve 17.

### <Operation System>

As illustrated in FIGS. 2 to 4, the operation system of the shovel 100 according to the present embodiment includes the pilot pump 15, the operation device 26, and the hydraulic control valve 31.

The pilot pump 15 supplies a pilot pressure to various hydraulic devices via pilot lines. The pilot pump 15 is mounted on, for example, a rear portion of the upper turning body 3 similarly to the engine 11. The pilot pump 15 is, for example, a fixed displacement hydraulic pump, and is driven by the engine 11 as described above.

A gate lock valve 25V may be provided on the most upstream side of pilot lines connecting the pilot pump 15 and various hydraulic devices. The gate lock valve 25V switches between communication and interruption (non-communication) of the pilot lines by turning on/off of a limit switch in conjunction with operation of a gate lock lever (not illustrated) inside the cabin 10. The gate lock lever is used to operate a gate bar 80. Specifically, it is used to switch between a state in which the gate bar 80 is pulled up rearward and the operator can get on and off a cockpit 60 and a state in which the gate bar 80 is pulled down forward and the operator cannot get on and off the cockpit 60. When the gate lock lever is in an operation state corresponding to a state in which the gate lock lever is pulled up to the rear of the gate bar 80, that is, when the cockpit 60 is open, the limit switch is turned off, a voltage is not applied from the power source (for example, a battery) to the solenoid of the gate lock valve 25V, and the gate lock valve 25V is in a non-communication state. Therefore, the pilot line is blocked, and the hydraulic oil is not supplied to various hydraulic devices including the operation device 26 and the hydraulic control valve 31. On the other hand, in an operation state corresponding to a state in which the gate lock lever is pulled down to forward of the gate bar 80, that is, in a state in which the cockpit 60 is closed, the limit switch is turned on, a voltage is applied from the power supply to the solenoid of the gate lock valve 25V, and the gate lock valve 25V is brought into a communication state. Therefore, the pilot line is communicated, and the hydraulic oil is supplied to various hydraulic devices including the operation device 26 and the hydraulic control valve 31.

The operation device 26 is provided in the vicinity of a cockpit 60 inside the cabin 10, and is used by an operator to operate various driven elements (the lower traveling body 1, the upper turning body 3, the boom 4, the arm 5, the bucket 6, and the like). In other words, the operation device 26 is used by the operator to operate the hydraulic actuators that drive the respective driven elements (that is, the traveling hydraulic oil motors 1A and 1B, the turning hydraulic oil motor 2A, the boom cylinder 7, the arm cylinder 8, the bucket cylinder 9, and the like).

As illustrated in FIGS. 3 and 4, the cockpit 60 includes a seat 62 and a seatback 64 on which a user (operator) sits. The cockpit 60 is configured to be slidable in the front-rear direction, and the seatback 64 is configured to be able to be reclined (reclining) about a rotation axis in the left-right direction of the rear end portion of the seat 62. Further, a left arm rest 66A and a right arm rest 66B corresponding to the height of the elbows of the operator seated on the cockpit 60 are provided so as to be adjacent to the left and right of the range from the rear end portion to the central portion in the front-rear direction of the cockpit 60 (seat 62). Each of the left arm rest 66A and the right arm rest 66B is supported so as to be rotatable upward about a shaft in the left-right direction at a rear end portion thereof. In addition, the length of the front end portion of the right arm rest 66B in the front-rear direction may be appropriately set so as not to cover a switch panel 51 described later in a top view even when the cockpit 60 is located at the front end portion of the slidable range.

A left console 70A and a right console 70B are disposed on the left and right sides of the cockpit 60 from the rear end portion to the center portion in the front-rear direction of the cockpit 60. A window-side console 70C is provided between the right console 70B and the window on the right-side surface so as to extend from the front end portion to the rear end portion of the cabin 10. A radio 53 or the like is provided on the window-side console 70C.

The operation device 26 includes, for example, a left operation lever 26A and a right operation lever 26B for operating the boom 4 (boom cylinder 7), the arm 5 (arm cylinder 8), the bucket 6 (bucket cylinder 9), and the upper turning body 3 (turning hydraulic oil motor 2A). Further, the operation device 26 includes, for example, a left travel pedal 26C and a left travel lever 26E for operating a crawler (traveling hydraulic oil motor 1A) on the left side of the lower traveling body 1. The operation device 26 includes, for example, a right travel pedal 26D and a right travel lever 26F for operating a crawler (traveling hydraulic oil motor 1B) on the right side of the lower traveling body 1.

The left operation lever 26A and the right operation lever are respectively disposed so as to be adjacent to the right side and the left side of the front end portion of the cockpit 60 and to be adjacent to the front of a left console 120A and a right console 120B. A lever cover 27 is attached to a base end portion of each of the left operation lever 26A and the right operation lever 26B on a side opposite to a tip end portion held by an operator.

The left travel pedal 26C and the right travel pedal 26D are each disposed on a floor surface in front of the cockpit 60. The left travel pedal 26C and the right travel pedal 26D are respectively disposed at positions offset to some extent to the left side and the right side from the central portion in the left-right direction of the cockpit 60.

The left travel lever 26E and the right travel lever 26F are provided so as to extend upward from the vicinity of the left travel pedal 26C and the right travel pedal 26D, respectively.

For example, as illustrated in FIG. 2, the operation device 26 is a hydraulic pilot type. Specifically, the operation device 26 outputs a pilot pressure corresponding to the operation content to the pilot line on the secondary side by using the hydraulic oil supplied from the pilot pump 15 through the pilot line. The pilot line on the secondary side of the operation device 26 is connected to the control valve 17 (specifically, the pilot ports of the control valves 171 to 176). Thus, the pilot pressure corresponding to the operation content related to various driven elements (hydraulic actuators) in the operation device 26 can be input to the control valve 17. Therefore, the control valve 17 can drive each hydraulic actuator in accordance with the operation content of the operation device 26 by the operator or the like.

In addition, for example, the operation device 26 may be an electric type. Specifically, the operation device 26 outputs an electric signal (hereinafter, referred to as an "operation signal") corresponding to the operation content, and the operation signal is captured by the controller 30. Then, the controller 30 outputs a control command corresponding to the content of the operation signal, that is, a control signal corresponding to the content of an operation performed on the operation device 26, to a hydraulic control valve (hereinafter, referred to as an "hydraulic control valve for operation ") capable of supplying a pilot pressure to the pilot port of each of the control valves 171 to 176 of the control valve 17. The hydraulic control valve for operation is, for example, an electromagnetic proportional valve, and may output a pilot pressure corresponding to an input control signal (control current) to the control valve 17 (control valves 171 to 176) using the hydraulic oil supplied from the pilot pump 15. Accordingly, the pilot pressure corresponding to the operation content of the operation device 26 is input from the hydraulic control valve for operation to the control valve 17, and the control valve 17 can drive each hydraulic actuator in accordance with the operation content of the electric operation device 26.

In addition, the control valves 171 to 176 (direction switching valves) that are built in the control valve 17 and drive the respective hydraulic actuators may be electromagnetic solenoid valves. In this case, the operation signal output from the operation device 26 may be directly input to the control valve 17, that is, the electromagnetic solenoid type control valves 171 to 176.

The hydraulic control valve for operation is provided for each driven element (hydraulic actuators) to be operated by the operation device 26. That is, the hydraulic control valve for operation is provided, for example, for each of the left crawler (traveling hydraulic oil motor 1A), the right crawler (traveling hydraulic oil motor 1B), the upper turning body 3 (turning hydraulic oil motor 2A), the boom 4 (boom cylinder 7), the arm 5 (arm cylinder 8), and the bucket 6 (bucket cylinder 9).

In addition, the hydraulic control valve for operation may be used for a remote operation function of the shovel 100, for example. Specifically, the controller 30 may output a control signal corresponding to the content of a remote operation designated by a remote operation signal received from a predetermined external device (for example, a management device 300 or a terminal device 200 described below) to the hydraulic control valve for operation by a predetermined communication device mounted on the shovel 100. As a result, the controller 30 can supply the pilot pressure corresponding to the content of the remote operation from the hydraulic control valve for operation to the control valve 17 and realize the operation of the shovel 100 based on the remote operation of the operator.

Further, the hydraulic control valve for operation may be used for a semi-automatic operation function of the shovel 100, for example. Specifically, the controller 30 outputs a control signal corresponding to an operation command related to the semi-automatic operation function of the hydraulic actuators different from the operation target of the operator to the hydraulic control valve for operation regardless of whether or not the operation device 26 is operated. As a result, the controller 30 can supply the pilot pressure corresponding to the operation command related to the semi-automatic operation function from the hydraulic control valve for operation to the control valve 17 and realize the operation of the shovel 100 based on the semi-automatic operation function.

The hydraulic control valve 31 operates in response to a control command output from the controller 30, and controls the pilot pressure acting on the pilot port of the bleed valve 177. The hydraulic control valve 31 is, for example, an electromagnetic proportional valve. Specifically, the hydraulic control valve 31 may adjust the pilot pressure introduced from the pilot pump 15 to the pilot port of the bleed valve 177 in the control valve 17 in accordance with the current command output by the controller 30. For example, the hydraulic control valve 31 may operate such that the pilot pressure introduced into the pilot port of the bleed valve 177 increases as the input current command (control current) increases.

### <User Interface System>

As illustrated in FIG. 2, the user interface system of the shovel 100 according to the present embodiment includes the operation device 26, an operation mode changeover switch 32, a mode level adjustment dial 34, the display device 40, and the input device 42. As illustrated in FIGS. 2 to 4, the user interface system of the shovel 100 according to the present embodiment includes a switch panel 51, an ignition switch 52, locker switches 54, switches 58ar to 58dr, and switches 58al to 58dl.

The operation mode changeover switch 32 receives an operation input for selectively switching one operation mode (hereinafter referred to as a "utilization operation mode") to be utilized by the shovel 100 from among a plurality of predetermined operation modes of the shovel 100.

The plurality of operation modes is configured to have mutually different output characteristics related to the operation of the shovel 100. The output related to the operation of the shovel 100 may include, for example, a traveling speed of the lower traveling body 1, a turning speed of the upper turning body 3, an operation speed of an attachment, an excavation force, a force for lifting a suspended load, and the like.

The plurality of operation modes includes, for example, a normal operation mode serving as a reference (hereinafter referred to as a "normal operation mode"). The plurality of operation modes may include, for example, an operation mode (hereinafter, referred to as an "energy saving mode") in which an output characteristic related to the operation of the shovel 100 is defined so that energy efficiency is higher than that in the normal operation mode. Further, the plurality of operation modes may include, for example, an operation mode in which an output characteristic related to the operation of the shovel 100 is defined in accordance with a specific task. The specific work includes, for example, a lifting operation in which a load is suspended on a hook attached to a base end portion on the back surface side of the bucket 6, and the load is moved by turning the upper turning body 3 or operating an attachment. That is, the plurality of operation modes may include, for example, an operation mode (hereinafter referred to as a "lifting mode" or an "L mode") in which an output characteristic related to the operation of the shovel 100 is defined.

As illustrated in FIGS. 3 and 4, the operation mode changeover switch 32 is, for example, a push switch provided at an upper end portion of the mode level adjustment dial 34. The operation mode changeover switch 32 may be configured such that the operation mode to be selected is sequentially switched for each operation input. In addition, the operation mode changeover switch 32 may be configured such that a specific operation mode is selected from a plurality of operation modes by a combination of the number of operation inputs (press inputs), a difference in operation method (for example, short press and long press), and the like. An output signal corresponding to the input content received by the operation mode changeover switch 32 is taken into the controller 30.

The currently selected operation mode is displayed on the display device 40. An input device for selecting the operation mode may be provided for each of the plurality of operation modes. The function of the operation mode changeover switch 32 may be realized by another input device that receives an input for selecting an operation mode from a user by a method other than an operation input. For example, it may be realized by a voice input device or a gesture input device that receives voice input or gesture input for selecting an operation mode. The voice input device includes, for example, a microphone that acquires voice information of the operator. The gesture input device includes, for example, an imaging device (camera) that captures an image of a gesture of the operator. When the shovel 100 is remotely operated from a predetermined external device, the external device may be provided with an input device having the same function as the operation mode changeover switch 32 (hereinafter referred to as an "operation mode changeover input device"). In this case, a signal representing the content of the input received by the operation mode changeover input device is transmitted from the external device to the shovel 100. Accordingly, the operator of the external device can switch the utilization operation mode of the shovel 100 using the operation mode changeover input device.

The mode level adjustment dial 34 receives an operation input for adjusting a level (hereinafter, referred to as a "mode level") of an output related to an operation of the shovel 100 defined for each of a plurality of operation modes. The mode level is configured to be adjustable by a predetermined number of steps defined in advance for each of the plurality of operation modes. In the present example (FIG. 2), the mode level adjustment dial 34 is configured such that the user can adjust the mode level among a maximum of 10 levels (level 1 to level 10). Accordingly, the user can adjust the level of the output related to the operation of the shovel 100 in accordance with the work situation and the characteristics of the operator. An output signal corresponding to the input content received by the mode level adjustment dial 34 is taken into the controller 30.

The currently selected mode level is displayed on the display device 40. In addition, instead of adjusting the mode level through the mode level adjustment dial 34, a predetermined parameter (for example, the rotation speed of the engine 11 or the like) (hereinafter, referred to as "output parameter") representing the output related to the operation of the shovel 100 may be adjustable. For example, the mode level adjustment dial 34 may be used to adjust a predetermined output parameter continuously or in increments of a predetermined value. When there are a plurality of adjustable output parameters, a plurality of input devices similar to the mode level adjustment dial 34 may be provided.

As illustrated in FIGS. 3 and 4, the mode level adjustment dial 34 is disposed in the switch panel 51 at the front end portion of the right console 70B behind the right operation lever 26B.

The mode level adjustment dial 34 has a substantially cylindrical shape, is provided with a base 56 provided on an upper surface 55 of the switch panel 51 inclined rearward, and is installed on the upper surface of the base 56. The mode level adjustment dial 34 is configured to be rotatable about a rotation axis A, which is a central axis of the cylindrical shape of the mode level adjustment dial 34, and can output an output signal representing a mode level to the controller 30 in response to rotation about the rotation axis A. As described above, the operation mode changeover switch 32 is provided on the upper end surface of the mode level adjustment dial 34.

For example, the mode level adjustment dial 34 may be configured such that the relative increase or decrease of the level from the current mode level can be adjusted in accordance with the rotation direction and the relative rotation angle from the start of rotation. Specifically, one of increase and decrease of the mode level may be assigned to each of the left direction and the right direction of rotation, and the mode level may be increased or decreased one by one every time the relative rotation angle from the start of rotation increases by a predetermined value. For example, when the right direction is the direction in which the level is raised and the left direction is the direction in which the level is lowered, an output signal for raising the mode level by 1 may be output every time a predetermined amount of rotation is performed in the right direction, and an output signal for lowering the mode level by 1 may be output every time a predetermined amount of rotation is performed in the left direction. In addition, in the state of the maximum mode level, the state in which the maximum mode level is selected may be maintained regardless of the degree of rotation in the right direction, and similarly, in the state of the minimum mode level, the state in which the minimum mode level is selected may be maintained regardless of the degree of rotation in the left direction. In this case, the rotatable range of the mode level adjustment dial 34 does not need to be limited, and the mode level adjustment dial 34 may be configured to be infinitely rotatable.

The mode level adjustment dial 34 is disposed such that the direction of the rotation axis A is inclined toward the front right operation lever 26B side with respect to the Z-axis direction. Specifically, the base 56 is configured such that the upper surface thereof is inclined forward, and the mode level adjustment dial 34 is installed on the upper surface of the base 56 such that the rotation axis A is inclined forward. An inclination angle θ2 of the rotation axis A of the mode level adjustment dial 34 with respect to the upper surface 55 of the switch panel 51 is, for example, about 20 degrees to 50 degrees. When the rotation axis A of the mode level adjustment dial 34 is inclined forward, the user can easily hold the mode level adjustment dial 34 while placing his/her arms on the right arm rest 76B. Therefore, the operability of the mode level adjustment dial 34 can be improved.

The function of the mode level adjustment dial 34 may be realized by another input device that receives an input for adjusting the engine speed from the user by a method other than the operation input. For example, it may be realized by a voice input device or a gesture input device that receives voice input or gesture input for adjusting the engine speed. When the shovel 100 is remotely operated from a predetermined external device, the external device may be provided with an input device having the same function as the mode level adjustment dial 34 (hereinafter referred to as "mode level adjustment input device"). In this case, a signal representing the content of the input received by the mode level adjustment input device is transmitted from the external device to the shovel 100. Thus, the operator of the external device can adjust the mode level of the utilization operation mode using the mode level adjustment input device.

The display device 40 outputs visual information to a user (operator) of the shovel 100 inside the cabin 10. The display device 40 displays various information images at locations that are easily visible to the seated operator in the cabin 10. As illustrated in FIG. 3, the display device 40 is provided at the front right corner of the cabin 10, in particular, at the front end of the window console 70C. The display device 40 is, for example, a liquid crystal display or an organic electroluminescence (EL) display.

Further, instead of or in addition to the display device 40, another output device that outputs information to the user by another method may be provided. The other output devices may include, for example, a sound output device such as a buzzer or a speaker, a vibration device that vibrates the cockpit 60, and the like.

The input device 42 is provided below and adjacent to the display region of the display device 40, receives various inputs for screen operation of the display device 40 by an operator, and a signal corresponding to the received input is taken into the controller 30.

For example, the input device 42 is an operation input device that receives an operation input. The operation input device includes a touch panel mounted on the display device, a touch pad provided around the display device, a button switch, a lever, a toggle, and the like.

In addition, for example, the input device 42 may be a voice input device, a gesture input device, or the like that receives voice input or gesture input of the operator.

The switch panel 51 is provided on an upper surface of a front end portion of the right console 70B behind the right operation lever 26B. The upper surface 55 of the switch panel 51 is disposed so as to be inclined toward a rear right arm rest 106B side. The inclination angle θ1 of the upper surface 55 is, for example, about 10 degrees to 40 degrees. Thus, the operator can easily see the upper surface 55 of the switch panel 51, and operability can be further improved. The switch panel 51 includes switches 51a to 51f.

Input functions related to functions with a relatively high frequency of use are assigned to the switches 51a to 51f.

The locker switch 54 is disposed on the upper surface of the right console 70B and below the right arm rest 106B. An input function related to an optional function of the shovel 100 may be appropriately adopted as the locker switch 54. The locker switch 54 may include, for example, an input function related to switching of a standby circuit used in an application device (a grapple, a lifting magnet, or the like), an input function related to a travel alarm, an input function related to ON/OFF switching of an obstacle detection function, and the like.

The switches 58ar to 58dr are disposed at a distal end portion of the left operation lever 26A.

The switches 58al to 58dl are disposed at a distal end portion of the right operation lever 26B.

The switches 58ar to 58dr and 58al to 58dl are assigned input functions related to various functions (for example, ON/OFF switching of the hands-free function and the semi-automatic driving function) used by the operator while steering the shovel 100.

### <Control System>

As illustrated in FIG. 2, the control system of the shovel 100 according to the present embodiment includes the controller 30. The control system of the shovel 100 according to the present embodiment includes a discharge pressure sensor 28 and an operation pressure sensor 29.

The controller 30 performs various types of control related to the shovel 100. The functions of the controller 30 may be realized by arbitrary hardware, a combination of arbitrary hardware and software, or the like. For example, the controller 30 is mainly configured by a computer including a central processing unit (CPU), a memory device such as a random access memory (RAM), a non-volatile auxiliary storage device such as a read only memory (ROM), interface devices for various input and output, and the like. For example, the controller 30 realizes various functions by loading a program installed in the auxiliary storage device into the memory device and executing the program on the CPU.

For example, the controller 30 controls the main pump 14 with the regulator 13 as a direct control target based on the outputs of the discharge pressure sensor 28, the operation pressure sensor 29, and the like.

In addition, the controller 30 performs control related to the bleed flow rate with the hydraulic control valve 31 as a direct control target, for example.

For example, the controller 30 performs control related to the operation of the hydraulic actuators (driven elements) of the shovel 100 with the hydraulic control valve for operation as a direct control target.

Specifically, the controller 30 may perform control related to the operation of the hydraulic actuators (driven elements) of the shovel 100 based on the operation of the electronic operation device 26 with the hydraulic control valve for operation as a direct control target.

In addition, the controller 30 may perform control related to remote operation of the hydraulic actuators (driven elements) of the shovel 100 with the hydraulic control valve for operation as a control target.

In addition, the controller 30 may perform control related to the semi-automatic driving function of the shovel 100 with the hydraulic control valve for operation as a direct control target.

For example, the controller 30 performs control related to the operation of the driven elements of the shovel 100. The controller 30 includes an operation control unit 301, an operation mode setting unit 302, and a mode level setting unit 303 as functional units that perform control related to the operation of the driven elements of the shovel 100. The controller 30 uses a storage unit 304. The storage unit 304 is realized by, for example, a storage area defined in a non-volatile auxiliary storage device or the like of the controller 30.

A part of the functions of the controller 30 may be realized by another controller (control device). That is, the functions of the controller 30 may be realized by a plurality of controllers in a distributed manner.

The discharge pressure sensor 28 detects the discharge pressure of the main pump 14. A detection signal corresponding to the discharge pressure detected by the discharge pressure sensor 28 is taken into the controller 30.

The operation pressure sensor 29 detects an operation content to the operation device 26 in the form of a pilot pressure (operation pressure) on the secondary side of the operation device 26. A detection signal corresponding to the operation pressure detected by the operation pressure sensor 29 is taken into the controller 30.

The operation control unit 301 controls the operation of the driven elements by setting the characteristics of the output parameter based on the set utilization operation mode and the set (i.e., currently utilized) mode level of the operation mode (hereinafter referred to as "utilization mode level").

The plurality of mode levels (for example, level 1 to level 10) are defined for each of the plurality of operation modes as described above. For each mode level corresponding to a certain operation mode, the characteristic of the output parameter is defined in advance such that the output related to the operation of the shovel 100 increases as the mode level increases.

The number of changeable output parameters associated with the operation mode and the mode level may be one or more. The output parameter may include, for example, a rotation speed of the engine 11 (hereinafter referred to as "engine speed"), a horsepower of the engine 11, a torque of the engine 11, and the like. When another prime mover (for example, an electric motor) is mounted on the shovel 100 instead of or in addition to the engine 11, the output parameter may include an output, a torque, or the like of the other prime mover (electric motor). The output parameters may include, for example, the horsepower, torque (hereinafter referred to as "pump torque"), discharge flow rate, discharge pressure, and the like of the main pump 14. In addition, the output parameter may include, for example, an opening degree of the direction switching valve (control valves 171 to 176), a flow rate, and the like. The output parameter may include, for example, an output of a hydraulic actuator (for example, a cylinder thrust), a torque (for example, a torque of a hydraulic oil motor), a speed, an acceleration, and the like. When some or all of the driven elements of the shovel 100 are electrically driven, the output parameter may include, for example, an output of the electric actuator (for example, thrust of a linear motor), torque (for example, torque of a rotary electric machine), speed, acceleration, and the like. In addition, the output parameter may include, for example, a parameter related to a relief pressure of the hydraulic circuit that affects the operation (output) of the hydraulic actuator. The parameter related to the relief pressure of the hydraulic circuit may include, for example, a parameter related to a set value of a relief pressure of an electromagnetic relief valve provided in the hydraulic circuit (for example, a current value of a control current supplied to the electromagnetic relief valve). The output parameter may include a parameter related to a correspondence relationship between an input serving as a trigger for operating the actuator and an output of the actuator. The input serving as a trigger for operating the actuator may include, for example, an operation input to the electric operation device 26, a remote operation signal, an operation command of an automatic driving function, and the like. The parameter relating to the correspondence relationship between the input serving as the trigger for operating the actuator and the output of the actuator may include, for example, a parameter representing a relational expression between the input serving as the trigger for operating the actuator and the control current output to the hydraulic control valve for operation.

The output characteristics related to the operation of the shovel 100 for each of the plurality of operation modes may be different as a whole. Thus, the characteristics of some of the plurality of output parameters may be the same between the two or more operating modes.

Data on the relationship between the mode level of each of the plurality of operation modes and the characteristic of the output parameter is stored in advance in, for example, an auxiliary storage device or the like inside the controller 30. Thus, the operation control unit 301 can set the characteristics of the output parameter based on the set operation mode and mode level. Therefore, the operation control unit 301 can realize the operation of the shovel 100 (driven elements) in accordance with the utilization operation mode and the utilization mode level which are set.

The operation mode setting unit 302 sets the utilization operation mode from among a plurality of operation modes based on, for example, an output signal output in response to an operation input received by the operation mode changeover switch 32. In addition, for example, when the shovel 100 is remotely operated, the operation mode setting unit 302 may set the utilization operation mode from among a plurality of operation modes based on a signal indicating the content of an input to the operation mode changeover input device received from an external device.

In addition, for example, when the shovel 100 is started up (for example, when a key switch is turned on), the operation mode setting unit 302 selects a predetermined operation mode (hereinafter, referred to as "start-up operation mode") (an example of a first operation mode) from among a plurality of operation modes and sets the selected operation mode as the utilization operation mode.

The start-up operation mode may be fixed and may be, for example, a normal operating mode. The start-up operation mode may be settable by the controller 30 in response to an input from a user of the shovel 100 through the input device 42 or the like. The start-up operation mode may be set by the controller 30 in response to a signal that is received from a predetermined external device (for example, a user terminal used by a user of the shovel 100, a management device of a management center of the shovel 100, or the like) and requests setting of the start-up operation mode. Accordingly, the user of the shovel 100 can operate the external device and cause the controller 30 to set the start-up operation mode from the external device.

The mode level setting unit 303 (an example of a level setting unit) sets a utilization mode level from among a plurality of mode levels based on an output signal output in response to an operation input received by the mode level adjustment dial 34.

In addition, for example, when the utilization operation mode is switched by the operation mode setting unit 302, the mode level setting unit 303 stores the utilization mode level in the utilization operation mode before switching in the storage unit 304 in association with the utilization operation mode before switching. Specifically, when the normal operation mode is switched to the lifting mode, the mode level setting unit 303 stores the normal operation mode and the mode level in the normal operation mode set before the switching in the storage unit 304 in association with each other. Similarly, when the shovel 100 is stopped, the mode level setting unit 303 stores the utilization mode level in the utilization operation mode in the storage unit 304 in association with the utilization operation mode set when the shovel 100 is stopped. Thus, as will be described later, the mode level setting unit 303 can employ the mode level previously used in a certain operation mode as it is when the same operation mode is used at the next time.

In addition, for example, when the utilization operation mode is switched by the operation mode setting unit 302, the mode level setting unit 303 sets the utilization mode level to the previous utilization mode level stored in the storage unit 304 in association with the utilization operation mode after switching. Specifically, in a case where the lifting mode is switched to the normal operation mode, the mode level setting unit 303 determines that the normal operation mode is the utilization operation mode in which there is a transition history after the shovel is started. Then, the mode level setting unit 303 sets the mode level to the previous mode level stored in the storage unit 304 in association with the normal operation mode. Thus, an operator can use the same mode level as when the same operation mode was used the last time only by performing an operation input for switching the utilization operation mode to the operation mode changeover switch 32 or the like. Therefore, it is possible to improve the convenience for an operator.

However, when there is no utilization mode level stored in association with the utilization operation mode after switching, the mode level setting unit 303 may set the mode level after switching of the utilization operation mode to a predetermined level (for example, level 1).

Further, for example, when the shovel 100 is started up, the mode level setting unit 303 sets the utilization mode level in the start-up operation mode to the utilization mode level stored in the storage unit 304 in association with the previous use of the operation mode same as the start-up operation mode. As a result, at the time of start-up of the shovel 100, the operator can use the same utilization mode level as in the last time the same operation mode as the start-up operation mode was used before the shovel 100 was last stopped, without performing an operation input to the mode level adjustment dial 34 or the like. Therefore, it is possible to improve the convenience for an operator.

For example, when the shovel 100 is started up, the mode level setting unit 303 sets the utilization mode level in the start-up operation mode to a predetermined mode level (hereinafter referred to as "start-up mode level"). The start-up mode level is a relatively low mode level (for example, level 1) (an example of a first level) among the plurality of mode levels. Then, for example, when the operation on the actuators becomes valid, the mode level setting unit 303 may set the utilization mode level to the utilization mode level stored in the storage unit 304 in association with the same operation mode as the previous start-up operation mode. The case where the operation with respect to the actuators becomes effective may be a case where the gate lock lever becomes an operation state corresponding to a state where the gate bar 80 is pulled down. The case where the operation on the actuators becomes effective may be a case where the start-up process of the electric actuators or the electric drive system including the power supply of the electric actuators is completed and the gate lock lever is in the operation state corresponding to the state where the gate bar 80 is pulled down. Thus, when the shovel 100 is started up, the mode level is set to be relatively low until the operation of the actuator becomes effective, and the output related to the operation of the shovel is relatively low. Therefore, it is possible to improve the convenience for an operator while ensuring safety at the time of starting up the shovel 100.

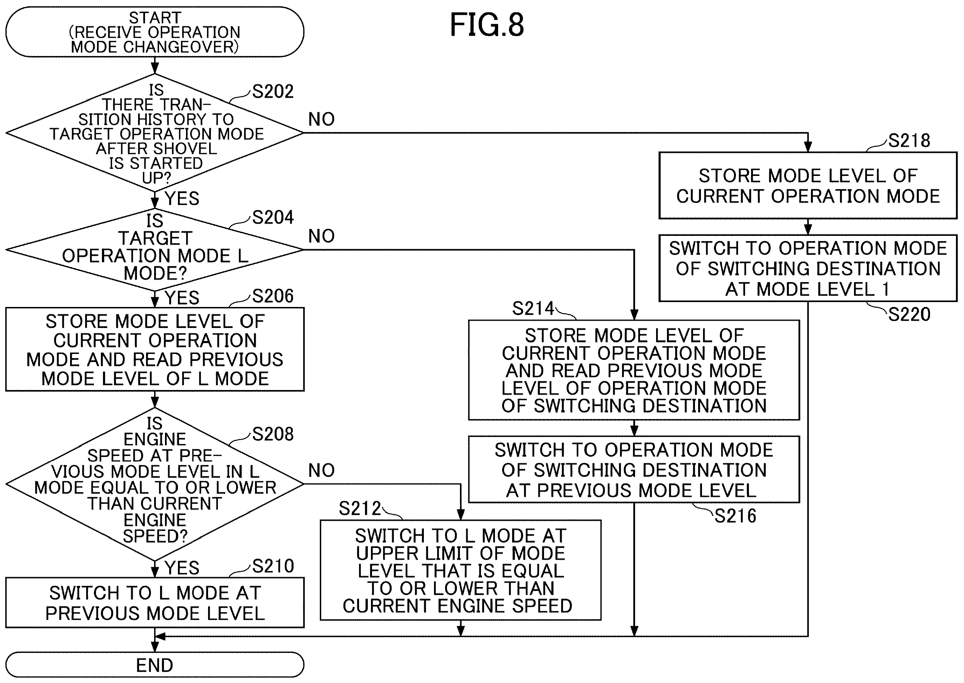

When the utilization operation mode is switched to a specific operation mode among the plurality of operation modes by the operation mode setting unit 302, the mode level setting unit 303 may set the utilization mode level in the specific operation mode so that the engine speed after switching does not exceed the engine speed at the utilization mode level of the utilization operation mode before switching. The specific operation mode is, for example, a lifting mode (an example of a second operation mode). As a result, it is possible to suppress the situation where the engine speed rises when switching to a specific operation mode, which would affect the work in that specific operation mode. The details will be described later (see FIG. 8).

As described above, when the utilization mode level is switched, the utilization mode level in the utilization operation mode before switching is stored in the storage unit 304 in association with the utilization operation mode before switching. At this time, if there is a utilization mode level already stored in association with the same operation mode, the utilization mode level is overwritten. As a result, the storage unit 304 can store only the utilization status of the latest mode level for each of the plurality of operation modes.

The contents stored in the storage unit 304 may be erased when the shovel 100 is stopped. Thus, at the next start-up of the shovel 100, the utilization mode level of the start-up operation mode can be suppressed to a relatively low start-up mode level. Therefore, it is possible to ensure safety at the time of starting up the shovel 100.

### [Characteristics of Parameter Representing Output Related to Operation of Shovel]

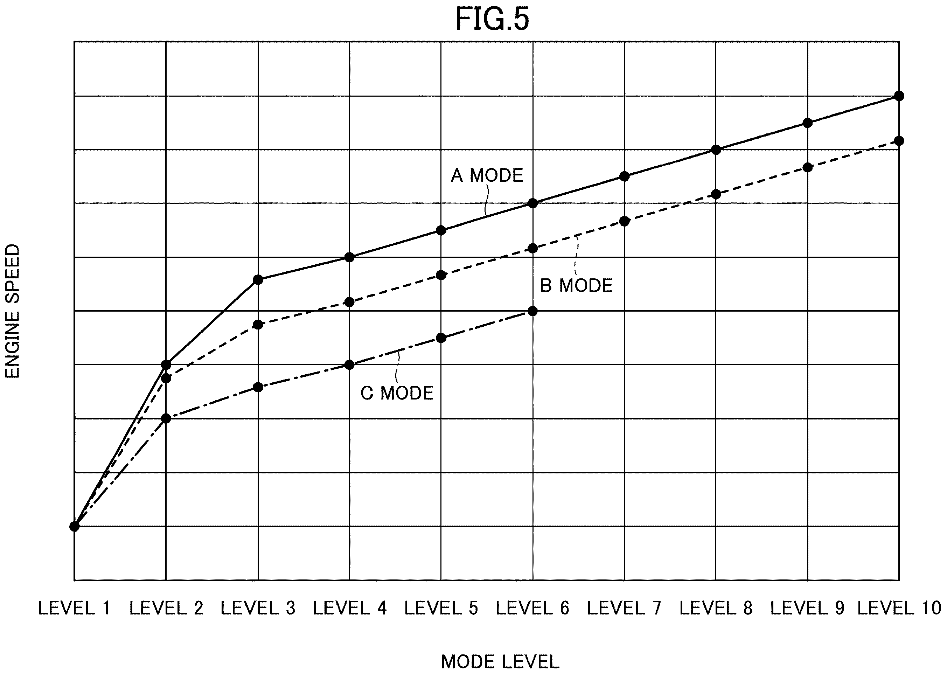

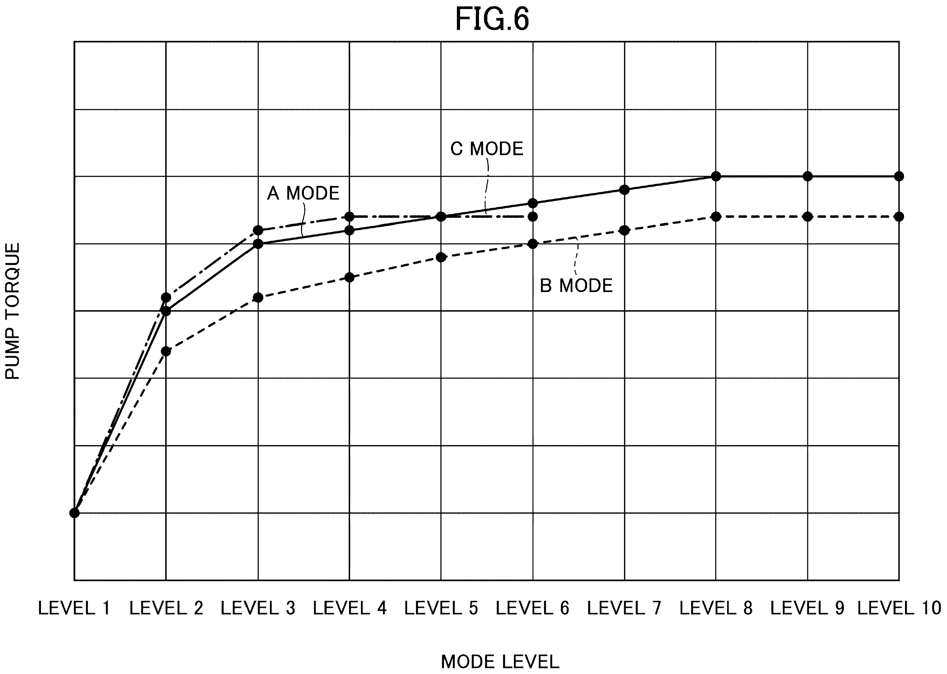

Next, with reference to FIGS. 5 and 6, a specific example of characteristics of a parameter (output parameter) representing an output related to the operation of the shovel for each of the plurality of operation modes will be described.

### <Characteristics of Engine Speed for Each of Plurality of Operation Modes>

FIG. 5 is a diagram illustrating an example of characteristics of a parameter (output parameter) representing an output related to the operation of the shovel 100 for each of a plurality of operation modes. Specifically, FIG. 5 is a diagram showing a specific example of the characteristics of the engine speed for each of the plurality of operation modes.

As illustrated in FIG. 5, in the present example, the plurality of operation modes available in the shovel 100 include an A mode, a B mode, and a C mode. In addition, in the A mode and the B mode, mode levels of ten stages (level 1 to level 10) are defined, and in the C mode, mode levels of six stages (level 1 to level 6) are defined. The A mode, the B mode, and the C mode may be, for example, a normal operation mode, an energy-saving mode, and a lifting mode (L mode), respectively. The same applies to the case of FIG. 6.

In each of the A mode to the C mode, the characteristic of the engine speed as the output parameter is defined such that the engine speed increases as the mode level increases from level 1 to the maximum level (level 10 or level 6).

In addition, in the A mode to the C mode, the characteristics of the engine speed are defined such that the engine speed is the same in the case of level 1, but the engine speed increases in the order from the C mode, through the B mode, to the A mode when compared at the same mode level in the case of level 2 or higher levels.

As described above, in the present example, the output characteristics related to the operation of the shovel 100 can be made different by making the characteristics of the engine speed at each mode level different among the A mode to the C mode.

### <Characteristics of Torque of Main Pump for Each of Plurality of Operation Modes>

FIG. 6 is a diagram illustrating another example of characteristics of a parameter (output parameter) representing an output related to the operation of the shovel 100 for each of a plurality of operation modes. Specifically, FIG. 6 is a diagram illustrating a specific example of characteristics of the torque (pump torque) of the main pump 14 for each of the plurality of operation modes.

As illustrated in FIG. 6, in each of the A mode and the B mode, the characteristic of the pump torque as the output parameter is defined such that the pump torque increases from level 1 to level 8 and is constant from level 8 to level 10.

In the C mode, the characteristics of the pump torque are defined such that the pump torque increases from level 1 to level 4 and is constant from level 4 to level 6.

In addition, in the A mode and the B mode, the characteristics of the pump torque are defined such that the pump torque is the same in the case of the level 1, but the pump torque in the A mode is larger than the pump torque in the B mode in the case of the level 2 or higher when compared at the same mode level.

In addition, in the C mode, the characteristics of the pump torque are defined such that the pump torque is the same as the pump torque in the A mode and the B mode in the case of the level 1, but is larger than the pump torque in the A mode and the B mode in the case of the levels 2 to 4 when compared at the same mode level. Further, in the C mode, the pump torque characteristic is defined such that the pump torque is the same as the pump torque in the A mode in the case of the level 5 and is smaller than the pump torque in the A mode in the case of the level 6, in conjunction with being larger than the pump torque in the B mode, when compared at the same mode level.

In this way, in the present example, by making the characteristics of the pump torque at each mode level different among the A mode to the C mode, it is possible to make the output characteristics related to the operation of the shovel 100 different.

### [Control Method Relating To Switching of Operation Mode]

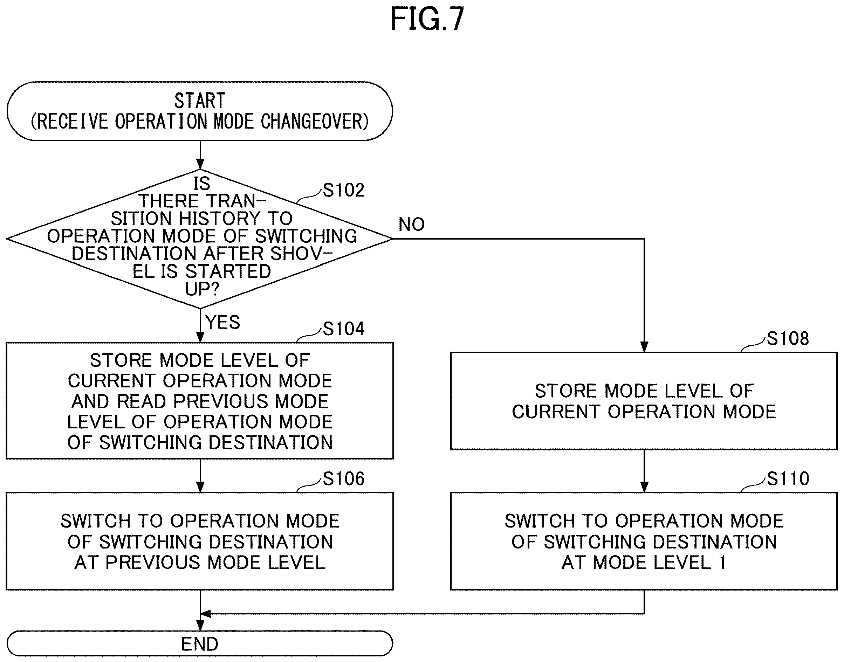

Next, with reference to FIGS. 7 and 8, a specific example of control processing related to switching of the operation mode will be described.

### <Example of Control Method Related to Switching of Operation Mode>

FIG. 7 is a flowchart schematically illustrating an example of control processing related to switching of the operation mode by the controller 30. The process of this flowchart is started when an operation input for switching the operation mode is received through the operation mode changeover switch 32. The same applies to the case of the flowchart illustrated in FIG. 8.

As illustrated in FIG. 7, in step S102, the mode level setting unit 303 determines whether or not there is a transition history (switching) to the operation mode of the switching destination designated by the operation input after the shovel 100 is started up. That is, after the shovel 100 is started up, the mode level setting unit 303 determines whether or not the utilization mode level stored in association with the operation mode of the switching destination designated by the operation input is present in the storage unit 304. The mode level setting unit 303 proceeds to step S104 when there is a transition history to the operation mode of the switching destination after the shovel 100 is started up, and proceeds to step S108 when there is no transition history to the operation mode of the switching destination.

In step S104, the mode level setting unit 303 stores the utilization mode level in the current operation mode (that is, the utilization operation mode before switching) in the storage unit 304 in association with the current mode level. Then, the mode level setting unit 303 reads the previous utilization mode level stored in association with the operation mode of the switching destination from the storage unit 304.

When the process in step S104 is completed, the controller 30 causes the process to proceed to step S106.

In step S106, the operation mode setting unit 302 and the mode level setting unit 303 switch the utilization operation mode to the switching destination operation mode at the read previous utilization mode level. Specifically, the operation mode setting unit 302 switches the utilization operation mode to the switching destination operation mode designated by the operation input, and the mode level setting unit 303 sets the utilization mode level in the switching destination operation mode to the read previous utilization mode level.

When the process in step S106 is completed, the controller 30 terminates the process illustrated in the current flowchart.

On the other hand, in step S108, the mode level setting unit 303 stores the utilization mode level in the current operation mode (that is, the utilization operation mode before switching) in the storage unit 304 in association with the current mode level.

When the process in step S108 is completed, the controller 30 causes the process to proceed to step S110.

In step S110, the operation mode setting unit 302 and the mode level setting unit 303 switch the utilization operation mode to the operation mode of the switching destination at the mode level of level 1. Specifically, the operation mode setting unit 302 switches the utilization operation mode to the switching destination operation mode designated by the operation input, and the mode level setting unit 303 sets the utilization mode level to level 1.

When the process in step S110 is completed, the controller 30 terminates the process illustrated in the current flowchart.

As described above, in this example, when the utilization operation mode is switched, the controller 30 stores the utilization mode level in the internal auxiliary storage device or the like (the storage unit 304) in association with the utilization operation mode before switching. When switching the utilization operation mode, the controller 30 sets the utilization mode level in the utilization operation mode after switching to the previous utilization mode stored in the internal auxiliary storage device or the like (the storage unit 304) in association with the utilization operation mode after switching.

As a result, the controller 30 can use the previous mode level when switching to the same operation mode at the next time. Therefore, when switching to the same operation mode at the next time, for example, the operator does not need to perform an operation input for reproducing the previous mode level on the mode level adjustment dial 34. Therefore, it is possible to improve convenience for the operator.

### <Another Example of Control Method Related to Switching of Operation Mode>

FIG. 8 is a flowchart schematically illustrating an example of control processing related to switching of the operation mode by the controller 30.

Step S202 is the same processing as step S102 in FIG. 7. The mode level setting unit 303 proceeds to step S204 when there is a transition history to the operation mode of the switching destination after the shovel 100 is started up, and proceeds to step S218 when there is no transition history to the operation mode of the switching destination.

In step S204, the mode level setting unit 303 determines whether or not the operation mode of the switching destination designated by the operation input is the lifting mode (L mode). The mode level setting unit 303 proceeds to step S206 when the operation mode of the switching destination is the lifting mode, and proceeds to step S214 when the operation mode of the switching destination is not the lifting mode.

In step S206, the mode level setting unit 303 stores the utilization mode level in the current operation mode (that is, the utilization operation mode before switching) in the storage unit 304 in association with the current mode level. Then, the mode level setting unit 303 reads the previous utilization mode level stored in the storage unit 304 in association with the lifting mode.

When the process in step S206 is completed, the controller 30 proceeds to step S208.

In step S208, the mode level setting unit 303 determines whether or not the engine speed at the previous utilization mode level of the read lifting mode is equal to or less than the current engine speed (that is, at the utilization mode level before switching). When the engine speed at the previous utilization mode level of the lifting mode is equal to or less than the current engine speed, the mode level setting unit 303 proceeds to step S210. On the other hand, when the engine speed at the previous utilization mode level of the lifting mode is higher than the current engine speed, the mode level setting unit 303 proceeds to step S212.

In step S210, the operation mode setting unit 302 and the mode level setting unit 303 switch the utilization operation mode to the lifting mode at the read previous utilization mode level. Specifically, the operation mode setting unit 302 switches the utilization operation mode to the lifting mode, and the mode level setting unit 303 sets the utilization mode level to the read previous utilization mode level.

When the process in step S210 is completed, the controller 30 terminates the process illustrated in the current flowchart.

On the other hand, in step S212, the operation mode setting unit 302 and the mode level setting unit 303 switch the utilization operation mode to the lifting mode at the upper limit of the mode level equal to or lower than the current engine speed. Specifically, the operation mode setting unit 302 switches the utilization operation mode to the lifting mode, and the mode level setting unit 303 sets the utilization mode level to the upper limit of the mode level that is equal to or lower than the engine speed at the utilization mode level of the utilization operation mode before switching.

When the process in step S212 is completed, the controller 30 terminates the process illustrated in the current flowchart.

For example, as illustrated in FIG. 6, the engine speed when the mode level of the lifting mode (C mode) is level 6 is lower than the engine speed when the mode level of the energy saving mode (B mode) is level 4 to level 10 (YES in step S208 in FIG. 8). Therefore, when the previous utilization mode level of the lifting mode is level 6 and the utilization mode level of the energy saving mode before switching is level 4 to level 10, the utilization operation mode is switched to the lifting mode at the mode level of level 6 (step S210 in FIG. 8).

On the other hand, the engine speed when the mode level of the lifting mode is level 6 is higher than the engine speed when the mode level of the energy saving mode is level 1 to level 3 (NO in step S208 in FIG. 8). For example, the upper limit of the mode level of the lifting mode that satisfies the engine speed equal to or lower than level 2 of the energy saving mode is level 3. Therefore, when the previous utilization mode level of the lifting mode is level 6 and the utilization level of the energy saving mode before switching is level 2, the utilization operation mode is switched to the lifting mode at the mode level of level 3 (step S212 in FIG. 8).

Referring back to FIG. 8, since steps S214 to S220 are the same as steps S104 to S110 in FIG. 7, description thereof will be omitted.

As described above, in this example, when the utilization operation mode is switched to the lifting mode by the operation mode setting unit 302, the mode level setting unit 303 sets the utilization mode level in the lifting mode so that the engine speed after switching does not exceed the engine speed at the utilization mode level of the utilization operation mode before switching.

As a result, for example, when the mode is switched to the lifting mode, it is possible to suppress a situation in which the turning speed of the upper turning body 3 or the operation speed of the attachments becomes higher than expected due to an increase in the engine speed, which causes a swaying of a load or the like. Therefore, the safety of the lifting operation can be improved.

### [Action]

Next, the operation of the shovel 100 according to the present embodiment will be described.

In the present embodiment, the operation mode setting unit 302 selectively sets one operation mode to be used (utilization operation mode) from among a plurality of operation modes having different output characteristics related to the operation of the shovel 100 in accordance with an input to the operation mode changeover switch 32 from a user. In addition, the mode level setting unit 303 selectively sets one mode level (utilization mode level) to be used in the utilization operation mode from among a plurality of mode levels of the output related to the operation of the shovel 100 defined for each of the plurality of operation modes in accordance with the input from the user. When the utilization operation mode is switched by the operation mode setting unit 302, the storage unit 304 stores the utilization mode level set in the utilization operation mode before switching in association with the utilization operation mode before switching.

Accordingly, when switching to a certain operation mode, the shovel 100 can adopt the same mode level as the utilization mode level used in the same operation mode at the previous time. Therefore, when switching the operation mode, the user does not need to perform an operation for adjusting the mode level to the same mode level as the previous time using the mode level adjustment dial 34. Therefore, the shovel 100 can improve convenience for the user when the operation mode is switched.

In the present embodiment, a characteristic of a parameter (output parameter) representing an output related to the operation of the shovel 100 at each of a plurality of mode levels may be defined in advance for each of a plurality of operation modes.

As a result, the shovel 100 can adjust the output parameter in accordance with the set mode level and realize a desired output characteristic related to the operation of the shovel 100 (reference machine).

As described above, when there is a plurality of adjustable output parameters, the characteristics of the plurality of output parameters may be individually adjustable instead of being collectively adjusted according to the mode level. In this case, when the utilization operation mode is switched by the operation mode setting unit 302, the controller 30 may store the settings of the plurality of output parameters set in the utilization operation mode before switching in the storage unit 304 in association with the utilization operation mode before switching. That is, when the utilization operation mode is switched by the operation mode setting unit 302, the controller 30 may store the settings of the user-changeable output related to the operation of the shovel 100 in the storage unit 304 in association with the utilization operation mode before the switching. As a result, when the plurality of output parameters can be individually adjusted, the settings of the plurality of output parameters when a certain operation mode was used the last time can be reused when the same operation mode is set the next time. Therefore, the shovel 100 can improve convenience for the user when the operation mode is switched.

In the present embodiment, when the utilization operation mode is switched by the operation mode setting unit 302, the mode level setting unit 303 may set the utilization mode level to the previous utilization mode level stored in the storage unit 304 in association with the utilization operation mode after the switching.

Thus, specifically, when switching to a certain operation mode, the shovel 100 can adopt the same mode level as the utilization mode level used in the same operation mode at the previous time.

In the present embodiment, when the shovel 100 is stopped (for example, when the key switch is turned off), the storage unit 304 may store the set utilization mode level in use in association with the set utilization operation mode in use.

Accordingly, for example, when the same operation mode as the operation mode at the time of the previous stop is used for the first time after start-up of the shovel, the shovel 100 can adopt the same mode level as the utilization mode level at the time of the previous stop. Therefore, the shovel 100 can further improve the convenience of the user.

In addition, in the present embodiment, the operation mode setting unit 302 sets a predetermined start-up operation mode (first operation mode) among a plurality of operation modes when the shovel 100 is started up (for example, when the key switch is turned on). Then, when the shovel 100 is started up, the mode level setting unit 303 may set the utilization mode level to the previous utilization mode level stored in the storage unit 304 in association with the start-up operation mode.

This allows the shovel 100, when starting up in the predetermined start-up operation mode, to adopt the same mode level that was used in the previous use of the start-up operation mode during the previous or earlier operation of the shovel 100. This allows the shovel 100 to improve user convenience during its start-up.

In the present embodiment, when the utilization operation mode is switched to a specific operation mode (second operation mode) among the plurality of operation modes by the operation mode setting unit 302, the mode level setting unit 303 may set the utilization mode level in the specific operation mode so that the engine speed after switching does not exceed the engine speed at the utilization mode level of the utilization operation mode before switching. The specific operation mode is, for example, a lifting mode for performing a lifting operation.

As a result, when the shovel 100 is switched to a specific operation mode, it is possible to suppress a situation in which the engine speed increases and affects work in the specific operation mode. For example, when the mode is switched to the lifting mode, it is possible to suppress a situation in which the rotation speed of the upper turning body 3 and the operation speed of the attachments become higher than expected due to an increase in the engine speed and cause a swaying of a load.

Although the embodiments have been described in detail above, the present disclosure is not limited to the specific embodiments, and various modifications and changes can be made within the scope described in the claims.

### DESCRIPTION OF THE REFERENCE NUMERALS

1 Lower traveling body
1A, 1B Traveling hydraulic oil motor
2A Turning hydraulic oil motor
3 Upper turning body
4 Boom
5 Arm
6 Bucket
7 Boom cylinder
8 Arm cylinder
9 Bucket cylinder
10 Cabin
11 Engine
14 Main pump
15 Pilot pump
17 Control valve
30 Controller
32 Operation mode changeover switch
34 Mode level adjustment dial
40 Display device
42 Input device
100 Shovel
301 Operation control unit
302 Operation mode setting unit
303 Mode level setting unit (level setting unit)
304 Storage unit

## Claims

1. A shovel (100) configured to
selectively use an operation mode among a plurality of operation modes having different output characteristics related to an operation of the shovel (100) in accordance with an input from a user,
**characterized in that**
the shovel (100) is configured to store, when the operation mode is switched, a setting of a user-changeable output related to an operation of the shovel in association with the operation mode used before switching, the setting being used in the operation mode before switching.

2. The shovel (100) according to claim 1,
comprising:
an operation mode setting unit (302) configured to selectively set an operation mode to be used from among a plurality of operation modes having different output characteristics related to an operation of the shovel (100) in accordance with an input from the user;
a level setting unit (303) configured to selectively set a level to be used in the operation mode from among a plurality of levels of an output related to an operation of the shovel (100) defined for each of the plurality of operation modes in accordance with an input from the user; and
a storage unit (304) configured to store, when the operation mode is switched by the operation mode setting unit (302), the level set in the operation mode before switching in association with the operation mode before switching.

3. The shovel (100) according to claim 2, wherein
a characteristic of a parameter representing an output related to an operation of the shovel (100) at each of the plurality of levels is defined in advance, for each of the plurality of operation modes.

4. The shovel (100) according to claim 3, wherein
the parameter representing the output related to the operation of the shovel (100) includes at least one of a parameter related to an output of a prime mover, a parameter related to an output of a hydraulic pump (14) that supplies hydraulic oil to a hydraulic actuator, a parameter related to a relief pressure of a hydraulic circuit that affects the output of the hydraulic actuator, a parameter related to an output of an electric actuator, and a parameter related to a correspondence relationship between an input serving as a trigger for operating the actuator and the output of the actuator.

5. The shovel (100) according to claim 3 or 4, wherein, when the operation mode is switched by the operation mode setting unit (302), the level setting unit (303) sets the level to a previous level stored in the storage unit (304) in association with the operation mode after switching.

6. The shovel (100) according to any one of claims 2 to 5, wherein, when the shovel (100) is stopped, the storage unit (304) stores the set level in use in association with the set operation mode in use.

7. The shovel (100) according to any one of claims 2 to 5, wherein, when the shovel (100) is stopped, the storage unit (304) erases stored contents.

8. The shovel (100) according to any one of claims 2 to 7, wherein, when the shovel (100) is started up, the operation mode setting unit (302) sets a first operation mode among the plurality of operation modes, the first operation mode being predetermined, and wherein the level setting unit (303) sets the level to a previous level stored in the storage unit (304) in association with the first operation mode when the shovel (100) is started up.

9. The shovel (100) according to any one of claims 2 to 7, wherein, when the shovel (100) is started up, the operation mode setting unit (302) sets a first operation mode among the plurality of operation modes, the first operation mode being predetermined, and wherein the level setting unit (303) sets the level to a relatively low first level among the plurality of levels when the shovel (100) is started up, and then sets the level to a previous level stored in the storage unit (304) in association with the first operation mode when an operation on the actuator becomes effective.

10. The shovel (100) according to claim 9, wherein
the case where the operation on the actuator becomes effective is a case where a gate lock lever becomes an operation state corresponding to a state of a gate bar (80) in which a user is disabled from getting on and off a cockpit (60).

11. The shovel (100) according to any one of claims 2 to 10, further comprising a prime mover, wherein,
when the operation mode is switched to a second operation mode among the plurality of operation modes by the operation mode setting unit (302), the level setting unit (303) sets the level in the second operation mode so that a rotation speed of the prime mover after switching does not exceed a rotation speed of the prime mover at the level in the operation mode before switching.

12. The shovel (100) according to claim 11,
wherein the second operation mode is an operation mode for performing a lifting operation.

13. The shovel (100) according to any one of claims 2 to 12, wherein, when the operation mode is switched by the operation mode setting unit (302), the storage unit (304) stores the level set in the operation mode before switching in association with the operation mode before switching so as to overwrite the level when the level stored in association with the operation mode before switching already exists.

14. The shovel (100) according to any one of claims 1 to 13, wherein the plurality of operation modes includes a normal operation mode serving as a reference and at least one of an operation mode in which an output characteristic related to the operation of the shovel (100) is defined so that energy efficiency is higher than in the normal operation mode and an operation mode in which an output characteristic related to the operation of the shovel (100) is defined in accordance with specific work.

15. The shovel (100) according to any one of claims 3 to 5, wherein the parameter is multiple parameters.

## Patentansprüche

1. Bagger (100), der konfiguriert ist,
selektiv einen Betriebsmodus unter mehreren Betriebsmodi mit unterschiedlichen Ausgabeeigenschaften in Bezug auf einen Betrieb des Baggers (100) gemäß einer Eingabe eines Benutzers auszuwählen, **dadurch gekennzeichnet, dass**
der Bagger (100) konfiguriert ist, wenn der Betriebsmodus umgeschaltet wird, eine Einstellung einer von einem Benutzer veränderbaren Ausgabe in Bezug auf einen Betrieb des Baggers in Verbindung mit dem vor Umschalten verwendeten Betriebsmodus zu speichern, wobei die Einstellung in dem Betriebsmodus vor Umschalten verwendet wird.

2. Bagger (100) nach Anspruch 1,
umfassend:
eine Betriebsmoduseinstelleinheit (302), die konfiguriert ist, gemäß einer Eingabe des Benutzers einen zu verwendenden Betriebsmodus unter mehreren Betriebsmodi mit unterschiedlichen Ausgabeeigenschaften in Bezug auf einen Betrieb des Baggers (100) selektiv einzustellen;
eine Niveaueinstelleinheit (303), die konfiguriert ist, selektiv ein in dem Betriebsmodus zu verwendendes Niveau unter mehreren Niveaus einer Ausgabe, die sich auf einen Betrieb des Baggers (100) bezieht und für jeden der mehreren Betriebsmodi definiert ist, entsprechend einer Eingabe des Benutzers einzustellen; und
eine Speichereinheit (304), die konfiguriert ist, wenn der Betriebsmodus durch die Betriebsmoduseinstelleinheit (302) umgeschaltet wird, das in dem Betriebsmodus vor Umschalten eingestellte Niveau in Verbindung mit dem Betriebsmodus vor Umschalten zu speichern.

3. Bagger (100) nach Anspruch 2, wobei eine Eigenschaft eines Parameters, der eine Ausgabe in Bezug auf einen Betrieb des Baggers (100) bei jeder der mehreren Niveaus darstellt, für jeden der mehreren Betriebsmodi im Voraus definiert ist.

4. Bagger (100) nach Anspruch 3, wobei der Parameter, der die Ausgabe in Bezug auf den Betrieb des Baggers (100) darstellt, mindestens einen von einem Parameter in Bezug auf eine Ausgabe einer Antriebsmaschine, einen Parameter in Bezug auf eine Ausgabe einer Hydraulikpumpe (14), die Hydrauliköl einem Hydraulikaktuator zuführt, einen Parameter in Bezug auf einen Entlastungsdruck eines Hydraulikkreislaufs, der die Ausgabe des Hydraulikaktuators beeinflusst, einen Parameter in Bezug auf eine Ausgabe eines elektrischen Aktuators, und einen Parameter in Bezug auf eine Korrespondenzbeziehung zwischen einer als ein Auslöser zum Betreiben des Aktuators dienenden Eingabe und der Ausgabe des Aktuators, umfasst.

5. Bagger (100) nach Anspruch 3 oder 4, wobei, wenn der Betriebsmodus durch die Betriebsmoduseinstelleinheit (302) umgeschaltet wird, die Niveaueinstellungseinheit (303) das Niveau auf ein vorheriges Niveau einstellt, das in der Speichereinheit (304) in Verbindung mit dem Betriebsmodus nach Umschalten gespeichert ist.

6. Bagger (100) nach einem der Ansprüche 2 bis 5, wobei die Speichereinheit (304), wenn der Bagger (100) gestoppt wird, das eingestellte Niveau in Verbindung mit dem eingestellten Betriebsmodus speichert.

7. Bagger (100) nach einem der Ansprüche 2 bis 5, wobei die Speichereinheit (304), wenn der Bagger (100) gestoppt wird, gespeicherte Inhalte löscht.

8. Bagger (100) nach einem der Ansprüche 2 bis 7, wobei, wenn der Bagger (100) gestartet wird, die Betriebsmoduseinstelleinheit (302) einen ersten Betriebsmodus unter mehreren Betriebsmodi einstellt, wobei der erste Betriebsmodus vorbestimmt ist, und wobei die Niveaueinstelleinheit (303) das Niveau auf ein vorheriges Niveau einstellt, das in der Speichereinheit (304) in Verbindung mit dem ersten Betriebsmodus gespeichert ist, wenn der Bagger (100) gestartet wird.

9. Bagger (100) nach einem der Ansprüche 2 bis 7, wobei, wenn der Bagger (100) gestartet wird, die Betriebsmoduseinstelleinheit (302) einen ersten Betriebsmodus unter den mehreren Betriebsmodi einstellt, wobei der erste Betriebsmodus vorbestimmt ist, und wobei die Niveaueinstellungseinheit (303) das Niveau auf ein relativ niedriges erstes Niveau unter den mehreren Niveaus einstellt, wenn der Bagger (100) gestartet wird, und dann das Niveau auf ein vorheriges Niveau einstellt, das in der Speichereinheit (304) in Verbindung mit dem ersten Betriebsmodus gespeichert ist, wenn eine Betätigung des Aktuators wirksam wird.

10. Bagger (100) nach Anspruch 9, wobei der Fall, bei dem die Betätigung des Aktuators wirksam wird, ein Fall ist, bei dem ein Türverriegelungshebel ein Betätigungszustand wird, der einem Zustand einer Türstange (80) entspricht, bei dem ein Benutzer daran gehindert ist, in ein Cockpit (60) ein- und auszusteigen.

11. Bagger (100) nach einem der Ansprüche 2 bis 10, ferner umfassend eine Antriebsmaschine, wobei,
wenn der Betriebsmodus durch die
Betriebsmoduseinstelleinheit (302) auf einen zweiten Betriebsmodus unter den mehreren Betriebsmodi umgeschaltet wird, die Niveaueinstelleinheit (303) das Niveau in dem zweiten Betriebsmodus so einstellt, dass eine Drehzahl der Antriebsmaschine nach Umschalten eine Drehzahl der Antriebsmaschine des Niveaus in dem Betriebsmodus vor Umschalten nicht überschreitet.

12. Bagger (100) nach Anspruch 11, wobei der zweite Betriebsmodus ein Betriebsmodus zum Durchführen eines Hebevorgangs ist.

13. Bagger (100) nach einem der Ansprüche 2 bis 12, wobei, wenn der Betriebsmodus durch die Betriebsmoduseinstelleinheit (302) umgeschaltet wird, die Speichereinheit (304) das in dem Betriebsmodus vor Umschalten eingestellte Niveau in Verbindung mit dem Betriebsmodus vor Umschalten speichert, um das Niveau zu überschreiben, wenn das in Verbindung mit dem Betriebsmodus vor Umschalten gespeicherte Niveau bereits vorhanden ist.

14. Bagger (100) nach einem der Ansprüche 1 bis 13, wobei die mehreren Betriebsmodi einen Normalbetriebsmodus, der als eine Referenz dient, und mindestens einen von einem Betriebsmodus umfassen, in dem eine Ausgabeeigenschaft, in Bezug auf den Betrieb des Baggers (100), so definiert ist, dass Energieeffizienz höher ist als in dem normalen Betriebsmodus, und einen Betriebsmodus, in dem eine Ausgabeeigenschaft in Bezug auf den Betrieb des Baggers (100) entsprechend spezifischer Arbeit definiert ist.

15. Bagger (100) nach einem der Ansprüche 3 bis 5, wobei der Parameter mehrere Parameter ist.

## Revendications

1. Une pelleteuse (100) configurée pour
utiliser de manière sélective un mode de fonctionnement parmi une pluralité de modes de fonctionnement ayant des caractéristiques de sortie différentes en rapport avec un fonctionnement de la pelleteuse (100), conformément à une entrée provenant d'un utilisateur, **caractérisée en ce que**
la pelleteuse (100) est configurée pour stocker, lorsque le mode de fonctionnement est commuté, un réglage d'une sortie modifiable par l'utilisateur connexe à un fonctionnement de la pelleteuse en association avec le mode de fonctionnement utilisé avant la commutation, le réglage étant utilisé dans le mode de fonctionnement avant la commutation.

2. La pelleteuse (100) selon la revendication 1, comprenant :
une unité de réglage de mode de fonctionnement (302) configurée pour régler de manière sélective un mode de fonctionnement à utiliser parmi une pluralité de modes de fonctionnement ayant des caractéristiques de sortie différentes en rapport avec un fonctionnement de la pelleteuse (100) conformément à une entrée provenant de l'utilisateur ;
une unité de réglage de niveau (303) configurée pour régler de manière sélective un niveau à utiliser dans le mode de fonctionnement parmi une pluralité de niveaux d'une sortie en rapport avec un fonctionnement de la pelleteuse (100) définis pour chacun de la pluralité de modes de fonctionnement conformément à une entrée provenant de l'utilisateur ; et
une unité de stockage (304) configurée pour stocker, lorsque le mode de fonctionnement est commuté par l'unité de réglage de mode de fonctionnement (302), le niveau réglé dans le mode de fonctionnement avant la commutation en association avec le mode de fonctionnement avant la commutation.

3. La pelleteuse (100) selon la revendication 2, dans laquelle une caractéristique d'un paramètre représentant une sortie en rapport avec un fonctionnement de la pelleteuse (100) à chacun de la pluralité de niveaux est définie à l'avance, pour chacun de la pluralité de modes de fonctionnement.

4. La pelleteuse (100) selon la revendication 3, dans laquelle le paramètre représentant la sortie en rapport avec le fonctionnement de la pelleteuse (100) comprend au moins l'un parmi un paramètre en rapport avec une sortie d'un moteur d'entraînement, un paramètre en rapport avec une sortie d'une pompe hydraulique (14) qui fournit de l'huile hydraulique à un actionneur hydraulique, un paramètre en rapport avec une pression de décharge d'un circuit hydraulique qui affecte la sortie de l'actionneur hydraulique, un paramètre en rapport avec une sortie d'un actionneur électrique, et un paramètre en rapport avec une relation de correspondance entre une entrée servant de déclencheur pour faire fonctionner l'actionneur et la sortie de l'actionneur.

5. La pelleteuse (100) selon la revendication 3 ou 4, dans laquelle, lorsque le mode de fonctionnement est commuté par l'unité de réglage de mode de fonctionnement (302), l'unité de réglage de niveau (303) règle le niveau à un niveau précédent stocké dans l'unité de stockage (304) en association avec le mode de fonctionnement après la commutation.

6. La pelleteuse (100) selon l'une quelconque des revendications 2 à 5, dans laquelle, lorsque la pelleteuse (100) est arrêtée, l'unité de stockage (304) stocke le niveau réglé en cours d'utilisation en association avec le mode de fonctionnement réglé en cours d'utilisation.

7. La pelleteuse (100) selon l'une quelconque des revendications 2 à 5, dans laquelle, lorsque la pelleteuse (100) est arrêtée, l'unité de stockage (304) efface le contenu stocké.

8. La pelleteuse (100) selon l'une quelconque des revendications 2 à 7, dans laquelle, lorsque la pelleteuse (100) est mise en marche, l'unité de réglage de mode de fonctionnement (302) règle un premier mode de fonctionnement parmi la pluralité de modes de fonctionnement, le premier mode de fonctionnement étant prédéterminé, et dans laquelle l'unité de réglage de niveau (303) règle le niveau à un niveau précédent stocké dans l'unité de stockage (304) en association avec le premier mode de fonctionnement lorsque la pelleteuse (100) est mise en marche.

9. La pelleteuse (100) selon l'une quelconque des revendications 2 à 7, dans laquelle, lorsque la pelleteuse (100) est mise en marche, l'unité de réglage de mode de fonctionnement (302) règle un premier mode de fonctionnement parmi la pluralité de modes de fonctionnement, le premier mode de fonctionnement étant prédéterminé, et dans laquelle l'unité de réglage de niveau (303) règle le niveau à un premier niveau relativement bas parmi la pluralité de niveaux lorsque la pelleteuse (100) est mise en marche, puis règle le niveau à un niveau précédent stocké dans l'unité de stockage (304) en association avec le premier mode de fonctionnement lorsqu'une opération sur l'actionneur devient effective.

10. La pelleteuse (100) selon la revendication 9, dans laquelle le cas où l'opération sur l'actionneur devient effective est un cas où un levier de verrouillage de porte devient un état de fonctionnement correspondant à un état d'une barre de porte (80) dans laquelle un utilisateur est empêché de monter et de descendre d'un habitacle (60).

11. La pelleteuse (100) selon l'une quelconque des revendications 2 à 10, comprenant en outre un moteur d'entraînement, dans laquelle,
lorsque le mode de fonctionnement est commuté vers un deuxième mode de fonctionnement parmi la pluralité de modes de fonctionnement par l'unité de réglage de mode de fonctionnement (302), l'unité de réglage de niveau (303) règle le niveau dans le deuxième mode de fonctionnement de sorte qu'une vitesse de rotation du moteur d'entraînement après la commutation ne dépasse pas une vitesse de rotation du moteur d'entraînement au niveau dans le mode de fonctionnement avant la commutation.

12. La pelleteuse (100) selon la revendication 11, dans laquelle le deuxième mode de fonctionnement est un mode de fonctionnement pour effectuer une opération de levage.

13. La pelleteuse (100) selon l'une quelconque des revendications 2 à 12, dans laquelle, lorsque le mode de fonctionnement est commuté par l'unité de réglage de mode de fonctionnement (302), l'unité de stockage (304) stocke le niveau réglé dans le mode de fonctionnement avant la commutation en association avec le mode de fonctionnement avant la commutation de manière à écraser le niveau lorsque le niveau stocké en association avec le mode de fonctionnement avant la commutation existe déjà.

14. La pelleteuse (100) selon l'une quelconque des revendications 1 à 13, dans laquelle la pluralité de modes de fonctionnement comprend un mode de fonctionnement normal servant de référence, et au moins l'un parmi un mode de fonctionnement dans lequel une caractéristique de sortie connexe au fonctionnement de la pelleteuse (100) est définie de sorte que l'efficacité énergétique est supérieure à celle du mode de fonctionnement normal, et un mode de fonctionnement dans lequel une caractéristique de sortie en rapport avec le fonctionnement de la pelleteuse (100) est définie conformément à un travail spécifique.

15. La pelleteuse (100) selon l'une quelconque des revendications 3 à 5, dans laquelle le paramètre correspond à de multiples paramètres.
